# EUROPÄISCHE PATENTSCHRIFT

(11) **EP 1 387 108 B1**
(45) Veröffentlichungstag und Bekanntmachung des Hinweises auf die Patenterteilung: **22.04.2009**
(21) Anmeldenummer: 03017416.3
(22) Anmeldetag: 01.08.2003
(51) Int. Cl.: F16F 1/38, F16F 1/387

(54) **Radiallager**
Radial bush
Manchon radial

(30) Priorität: 01.08.2002 DE 10235303
(43) Veröffentlichungstag der Anmeldung: 04.02.2004
(73) Patentinhaber: WOCO AVS GmbH, 63628 Bad Soden-Salmünster (DE); Volkswagen Aktiengesellschaft, 38436 Wolfsburg (DE)
(72) Erfinder: Mohr, Martin, 63628 Bad Soden-Salmünster/Eckhardroth (DE); Schmidt, Rainer, 38159 Vechelde (DE); Schulze, Carsten, 38440 Wolfsburg (DE); Walenczyk, Kai, 38159 Vechelde (DE)
(74) Vertreter: Weber-Bruls, Dorothée

(56) Entgegenhaltungen:
- EP-A- 0 809 039
- EP-A- 1 247 678
- US-A- 4 697 795
- US-A- 5 174 541
- US-A- 5 704 597
- US-A- 6 019 342
- PATENT ABSTRACTS OF JAPAN Bd. 1996, Nr. 01, 31. Januar 1996 (1996-01-31) -& JP 07 233849 A (N O K MEGURASUTEITSUKU KK), 5. September 1995 (1995-09-05)

## Beschreibung

Die Erfindung betrifft ein Radiallager, insbesondere zur Lagerung von Maschinen, Maschinenteilen und/oder Kraftfahrzeugteilen, umfassend ein sich entlang einer Längsachse des Radiallagers erstreckendes, mit einem zu lagernden Körper über zumindest eine Momentstütze verbindbares, im wesentlichen starres Innenteil und ein widerlagerbildendes, das Innenteil, insbesondere zumindest bereichsweise, koaxial umgebendes, im wesentlichen starres Außenteil und zumindest einen, das Innenteil mit dem Außenteil verbindenden elastischen Tragkörper, wobei das Innenteil im wesentlichen in zur Längsachse, senkrechter Richtung relativ zum Außenteil bewegbar ist.

Aus dem Stand der Technik ist eine Vielzahl von Radiallagern, insbesondere zum Einsatz in der Kraftfahrzeugtechnik, bekannt. So offenbart die US 6,019,342 eine Antivibrationsvorrichtung. In diesem gattungsgemäßen Lager sind zwei starre Kraftglieder über einen elastomeren Körper miteinander verbunden. Der Elastomerkörper weist eine erste und zweite Auskragung auf, die sich parallel zueinander erstrecken. Die Auskragungen dienen dazu, die relativen Bewegungen der Kraftglieder entlang einer vorbestimmten Achse und in eine vorbestimmte Richtung zu begrenzen. Die zweite Auskragung ist weniger steif als die erste und kommt bei einer Bewegung früher in Kontakt mit einer entsprechenden Gegenfläche, als die erste Auskragung.

Ferner offenbart die EP 0 748 949 B 1 ein gattungsgemäßes Radiallager, insbesondere zum Einsatz bei der Lagerung von Kraftfahrzeugmotoren. Das Radiallager umfaßt eine Außenhülse und eine zur Außenhülse koaxial als Buchsenkern ausgebildete Innenhülse, wobei die Außen- und die Innenhülse über Tragkörper miteinander verbunden sind. Weiterhin sind in einem zwischen Innen- und Außenhülse vorliegenden Freiraum mindestens ein radial ausgerichteter Elastomerkörper und mindestens ein Gummiendanschlag angeordnet, wobei der Gummiendanschlag nach einer vorbestimmbaren Einfederung des Elastomerkörpers wirkt.

Nachteilig bei den gattungsgemäßen Radiallagern ist jedoch, daß wenn die Innenhülse bzw. das erste Kraftglied über den Gummiendanschlag bzw. die erste Auskragung in Kontakt mit der Außenhülse bzw. dem zweiten Kraftglied kommt, eine Kraftübertragung in die Außenhülse bzw. das zweite Kraftglied sehr lokal stattfindet. Dementsprechend kommt es aufgrund der hohen punktuellen Belastung zu einer schnelleren Ermüdung des Materials der Außenhülse bzw. des zweiten Kraftgliedes, die zu einer Zerstörung dieser Teile der Radiallager führen können. Somit ist den gattungsgemäßen Radiallagern eine hohe Ausfallrate eigen bzw. muß die Struktur der Außenhülse bzw. des zweiten Kraftglieds groß dimensioniert werden, was zu einem erhöhten Gewicht bzw. vergrößerten Dimensionen des Radiallagers führt.

Ferner offenbart die DE 41 42 587 A1 einen Hilfsrahmen mit schwenkbar daran angelenkten Dreiecksquerlenkern, wobei der Hilfsrahmen und der Dreiechsquerlenker über gattungsgemäße Lager miteinander verbunden sind. Der Hilfsrahmen findet über eine gabelförmige Momentstütze Angriff an einem Innenteil des Lagers, während der Dreiechsquerlenker mit dem Außenteil des Lagers verbunden ist. Nachteilig bei einem derartigen Lager ist jedoch, daß die über die gabelförmige Momentstütze in das Lager eingebrachte Kraft nicht zentrisch innerhalb des Lagers abgetragen wird. Dies kann ebenfalls zu lokalen Überbeanspruchungen des Lagers führen.

US 4,471,935 offenbart ein elastisches Lager gemäß dem Oberbegriff des Anspruchs 1 mit einem im wesentlichen T-förmigen Elastomerkörper, der einen Innenzylinder an einen Außenzylinder abstützt.

JP 06147245 offenbart ein Isolationslager mit einem Innenzylinder und einem Außenzylinder sowie einen dazwischen liegenden Elastomerkörper. An der Innenseite des Außenteils sind Anschlagspuffer vorgesehen.

EP 0 809 039 A1 offenbart eine Hülsengummifeder mit zwei Außenanschlägen und einem Mittelanschlag, die im gleichen Abstand zum starren Außenteil angeordnet sind. Aus EP 1 247 678 ist eine Pendelstütze für ein Aggregat in einem Kraftfahrzeug mit einem Stützarm bekannt, der sich durch eine Öffnung eines starren Außenteils eines Radiallagers erstreckt.

Aufgabe der vorliegenden Erfindung ist es daher, die gattungsgemäßen Radiallager derart weiterzuentwickeln, daß die Nachteile des Stands der Technik überwunden werden, insbesondere eine gleichmäßige Abtragung von innerhalb des Lagers wirkenden und von außen in das Lager eingebrachten Kräften sichergestellt ist.

Diese Aufgabe wird durch ein Radiallager gemäß Anspruch 1 gelöst.

Dabei ist bevorzugt, daß die Endanschläge im wesentlichen in einer gemeinsamen radialen Ebene, gemeinsam mit dem Prallsegment angeordnet sind, wobei das Prallsegment zwischen den Endanschlägen angeordnet ist.

Dabei ist bevorzugt, daß der erste Winkel (α) im Bereich von 30° bis 150° liegt.

Ein erfindungsgemäßes Radiallager kann dadurch gekennzeichnet sein, daß das Prallsegment zumindest einen ersten mit dem Innenteil verbundenen elastischen Körper oder zumindest einen zweiten mit dem Außenteil verbundenen elastischen Körper umfaßt oder das Prallsegment durch die Kontur des Innenteils oder des Außenteils gebildet ist, wobei der erste elastische Körper oder die Kontur des Innenteils eine zu dem zweiten elastischen Körper oder der Kontur des Außenteils komplementäre Oberflächenform aufweisen.

Ferner kann vorgesehen sein, daß die Endanschläge jeweils zumindest einen dritten mit dem Innenteil verbundenen elastischen Körper oder jeweils zumindest einen vierten mit dem Außenteil verbundenen elastischen Körper umfassen, wobei der dritte elastische Körper oder die Kontur des Innenteils eine zu dem vierten elastischen Körper oder der Kontur des Außenteils komplementäre Oberflächenform aufweist bzw. aufweisen.

Bei den vorgenannten Alternativen ist bevorzugt, daß der erste, zweite, dritte und/oder vierte elastische Körper zumindest zwei Bereiche unterschiedlicher Elastizität aufweist bzw. aufweisen.

Ferner kann vorgesehen sein, daß der erste und zweite elastische Körper, der dritte und vierte elastische Körper und/oder der erste, zweite, dritte oder vierte elastische Körper einstükkig ausgebildet sind.

Eine bevorzugte Ausführungsform des Radiallagers ist erfindungsgemäß dadurch gekennzeichnet, daß der erste, zweite, dritte oder vierte elastische Körper zumindest einen Hohlraum, zumindest eine denselben bzw. dieselben zumindest bereichsweise durchsetzende Bohrung oder zumindest einen Hohlkanal . aufweisen, wobei der Hohlraum, die Bohrung /oder der Hohlkanal mit einem Fluid, füllbar ist bzw. sind, der Hohlraum, die Bohrung oder der Hohlkanal zur Einstellung. der elastischen Eigenschaften des bzw. der elastischen Körper vorzugsweise mittels zumindest eines Ventils zum Hinzufügen oder Entnehmen von Fluid aus dem Hohlraum, der Bohrung oder dem Hohlkanal öffnenbar und verschließbar sind, der Hohlraum, die Bohrung oder der Hohlkanal zumindest eine Verbindung mit der Umgebung des bzw. der elastischen Körper(s) mittels zumindest eines Drosselelementes aufweisen öder zumindest zwei voneinander getrennte oder über zumindest ein Ventil oder zumindest ein Drosselelement miteinander in Wirkverbindung stehende Hohlräume, Bohrungen und/oder Hohlkanäle in dem bzw. den elastischen Körper(n) vorhanden sind.

Es kann vorgesehen sein, daß eine, insbesondere im an das Radiallager angrenzenden Bereich, gabelförmig ausgeführte Momentstütze Angriff an den axialen Enden des Innenteils findet.

Dabei ist bevorzugt, daß der erste, zweite, dritte oder vierte elastische Körper oder der das Prallsegment oder den Endanschlag bildende Bereich des Innenteils oder Außenteils entlang der Längsachse des Radiallagers zumindest bereichsweise gewölbte Kontur aufweist.

Eine vorteilhafte Ausführungsform des Radiallagers sieht vor, daß das Außenteil, der zweite oder der vierte elastische Körper zumindest eine im wesentlichen in radialer Richtung verlaufende erste Öffnung zur Hindurchführung der Momentstütze durch das Außenteil aufweist.

Dabei kann vorgesehen sein, daß der Tragkörper zum Hindurchführen der Momentstütze zumindest eine zweite Öffnung oder das Innenteil, der erste oder dritte elastische Körper zur Aufnahme der Momentstütze zumindest eine dritte Öffnung aufweist, wobei sich die erste, zweite oder dritte Öffnung zumindest teilweise überdecken.

Bei den beiden vorgenannten Alternativen ist bevorzugt, daß die erste, zweite oder dritte Öffnung im wesentlichen mittig bezüglich der Länge des Radiallagers angeordnet sind.

Vorteilhafter Weise ist in einem erfindungsgemäßen Radiallager vorgesehen, daß das Innenteil, der elastische Tragkörper, der erste, zweite, dritteoder vierte elastische Körper oder das Außenteil, entlang zumindest einer Ebene senkrecht zur Längsachse des Radiallagers im Bereich der ersten, zweiten oder dritten Öffnung mehrteilig ausgeführt sind, wobei die beiden Teile des Innenteils, des Tragkörpers, des ersten, zweiten, dritten oder vierten elastischen Körpers oder des Außenteils im wesentlichen spiegelsymmetrisch zu der Ebene ausgebildet sind.

Ferner ist bevorzugt, daß der erste oder dritte elastische Körper oder der das Prallsegment oder den Endanschlag bildende Bereich des Innenteils zumindest bereichsweise eine bezüglich der Längsachse des Radiallagers geneigte Kontur aufweist, wobei die Kontur vorzugsweise ausgehend von einer, auf Höhe der ersten Öffnung liegenden Ebene entlang der Längsachse des Radiallagers in radialer Richtung nach außen geneigt ist.

Eine vorteilhafte Ausgestaltung des Radiallagers sieht vor, daß der zweite oder vierte elastische Körper oder der das Prallsegment oder den Endanschlag bildende Bereich des Außenteils zumindest bereichsweise eine bezüglich der Längsachse des Radiallagers geneigte Kontur aufweist, wobei die Kontur ausgehend von einer, auf Höhe der ersten Öffnung liegenden Ebene entlang der Längsachse des Radiallagers in radialer Richtung nach außen geneigt ist.

Schließlich kann vorgesehen sein, daß das Innenteil mittels einer Steck-, Klipp-, Schweiß-, Kleb- oder Schraubverbindung mit der Momentstütze verbindbar ist, wobei die. Schraubverbindung zumindest ein von dem Innenteil oder der Momentstütze umfaßtes Außengewinde und eine von der Momentstütze oder dem Innenteil umfaßten Gewindebohrung oder einen durch eine Bohrung sowohl im Innenteil als auch der Momentstütze verlaufenden Gewindebolzen, wobei die Bohrung des Innenteils und/oder der Momentstütze zumindest bereichsweise ein Innengewinde oder eine aufgesetzte Mutter aufweist, umfaßt, oder das Innenteil einstückig mit der Momentstütze ausbildbar ist.

Der Erfindung liegt somit die überraschende Erkenntnis zugrunde, daß ein Radiallager, insbesondere zum Einsatz in der Kraftfahrzeugtechnik, derart ausgebildet werden kann, daß Kräfte, die innerhalb des Lagers entstehen bzw. diesem von außen aufgeprägt werden, so im Radiallager abgetragen werden können, daß eine lokale Überbeanspruchung des Lagers vermieden wird. Durch eine Öffnung innerhalb des Außenteils des Lagers wird erreicht, daß eine Momentstütze in der Mitte der Längsachse des Radiallagers Angriff an das Innenteil finden kann und somit eine über die Momentstütze auf das Lager übertragene Kraft zentrisch in das Lager abgetragen wird. Neben dieser vorteilhaften Kraftübertragung in das Lager vereinfacht sich die Geometrie und der Aufbau der Momentstütze. Bei Verwendung einer gabelförmigen Momentstütze muß insbesondere der Gabelbereich erhöhten Festigkeitsanforderungen genügen, um eine Überbeanspruchung der Momentstütze und damit eine Fehlfunktion derselben zu vermeiden. Aufgrund der Hebelwirkung der Gabel kommt es nämlich zur Ausbildung von Kräften innerhalb der Momentstütze, die nicht an das Lager übertragen werden und somit von der Momentstütze selbst aufgenommen werden. So werden im Stand der Technik im wesentlichen Momentstützen eingesetzt, die aus Stahl bestehen. Bei Verwendung eines erfindungsgemäßen Radiallagers kann dagegen eine Momentstütze eingesetzt werden, die aus einem Leichtbaumaterial, insbesondere Aluminium, Magnesium, einer Keramik oder dergleichen, besteht. Darüber hinaus führt die Ausformung der Momentstütze in Gabelform dazu, daß aufgrund der Hebelwirkung der Gabel Kraftkomponenten in das Lager übertragen werden und von diesem aufgenommen werden, die bei einem zentrischen Angriff der Kraft nicht auftreten. Ferner sind bei einem gabelförmigen Angriff der Momentstütze an das Radiallager Freiwege in der Umgebung des Radiallagers zur Aufnahme der Momentstütze freizuhalten. Somit wird durch das erfindungsgemäße Radiallager sowohl den Leichtbauanforderungen, als auch den Anforderungen an einen geringeren Platzbedarf, die immer größere Bedeutung im Kraftfahrzeugbau bekommen, genüge getan. Insbesondere die zweiteilige Ausführung des Radiallagers mit einem zentrischen Kraftangriff der Momentstütze führt zu einer vereinfachten Montage und ermöglicht einen modularen Aufbau des Radiallagers, was zu einer einfachen Einstellung der Lagercharakteristiken führt und Lagerkosten reduziert, da nur eine begrenzte Anzahl unterschiedlicher Einzelkomponenten vorzuhalten ist.

Darüber hinaus können durch die Erfindung die innerhalb des Lagers wirkenden Kräfte so abgetragen, daß eine Überbeanspruchung der Komponenten des Lagers vermieden wird. Gemäß der Erfindung kann der Endanschlag nämlich seine Kraft in einem großen Winkel (größer als 40°) abtragen. Dies bewirkt, daß die Kräfte, die bei den aus dem Stand der Technik bekannten Lagern in einer radialen Ebene wirken, in zumindest zwei Radialebenen aufgeteilt werden. Diese Teilung führt dazu, daß die Kraftkomponenten in den umgebenden Bauteilen relativ niedrig sind. Die Endanschläge sind derart ausgeformt, daß komplementäre Oberflächen in Anschlag kommen, um eine punktuelle Belastung zu vermeiden und damit eine größtmögliche Fläche zur Erreichung einer geringen Flächenlast wirkt. Somit wird in dem erfindungsgemäßen Radiallager eine gleichmäßige Kraftverteilung erzielt, was zu einer erhöhten Belastbarkeit des Lagers bei gleicher Dimensionierung des Lagers bzw. der das Lager umgebenden Bauteile im Vergleich zu einem im wesentlichen nur in einer Ebene parallel zu der Längsachse des Radiallagers wirkenden Endanschlag führt. Andererseits werden Ermüdungserscheinungen des Materials verringert und somit eine erhöhte Lebensdauer des Radiallagers bewirkt.

Weitere Merkmale und Vorteile der Erfindung ergeben sich aus den nachstehenden Beschreibungen, in der bevorzugte Ausführungsformen der Erfindung beispielhaft anhand schematischer Zeichnungen im Einzelnen erläutert sind.

Dabei zeigt:
- Fig. 1: Eine Aufsicht auf ein erfindungsgemäßes Radiallager;
- Fig. 2: eine Schnittansicht entlang der Längsachse des Radiallagers der Fig. 1;
- Fig. 3: eine Schnittansicht aus der Richtung A der Fig. 2 des Radiallagers der Fig. 1 und 2;
- Fig. 4: eine Schnittansicht aus Richtung C der Fig. 3;
- Fig. 5: eine Teilschnittansicht aus Richtung D der Fig. 3;
- Fig. 6: eine Teilschnittansicht einer zweiten erfindungsgemäßen Ausführungsform eines Radiallagers; und
- Fig. 7: eine Teilschnittansicht einer dritten Ausführungsform eines erfindungsgemäßen Radiallagers.

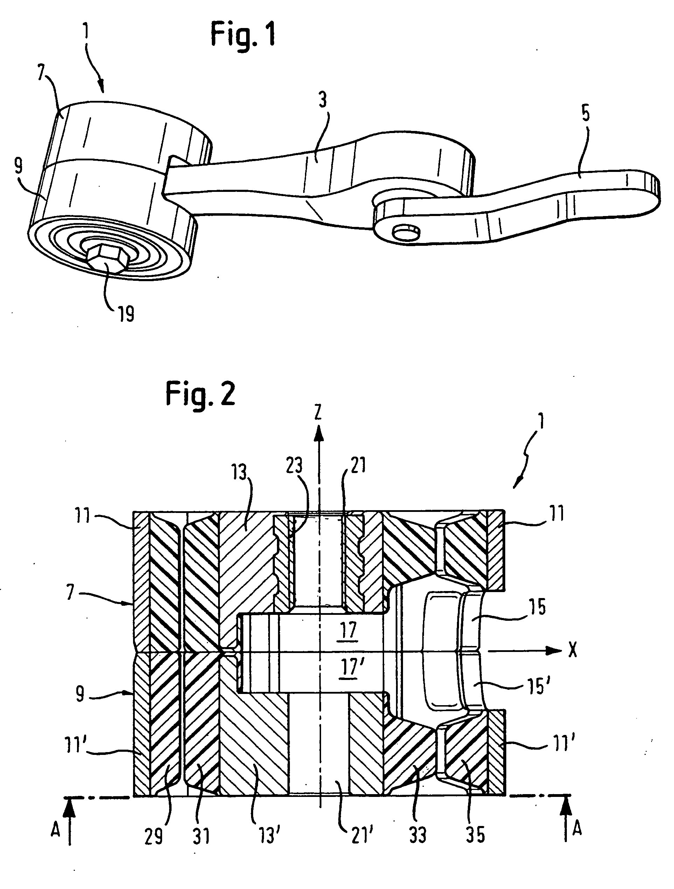

In Fig. 1 ist ein erfindungsgemäßes Radiallager 1 in Aufsicht dargestellt. Mit dem Radiallager 1 ist eine Momentstütze 3 verbunden, die wiederum über ein Gelenk mit einem Träger 5 in Verbindung steht. Unter Momentstütze im Sinne der Erfindung wird im allgemeinen ein Element verstanden, daß zur Herstellung einer Verbindung zwischen einem durch das Radiallager zu lagerndern Körper und dem Radiallager dient. Diese Momentstütze kann mit dem Körper verbindbar sein oder einstückig mit diesem und/oder dem Innenteil des Radiallagers ausgeführt sein. Wie Fig. 1 zu entnehmen ist, ist das Radiallager 1 zweiteilig ausgeführt. Es umfaßt einen oberen Lagerteil 7 sowie einen unteren Lagerteil 9.

In Fig. 2 ist eine Schnittansicht des Radiallagers 1 der Fig. 1 entlang der X-Z-Ebene des Radiallagers 1 dargestellt. Hierbei entspricht die Z-Achse der Längsachse des Radiallagers. Als radiale Richtung wird in dieser Erfindung eine zur Längsachse senkrechte Richtung verstanden. Die Bezugszeichen entsprechen denjenigen der Fig. 1, wobei in Fig. 2 die Momentstütze, die sich in Fig. 1 entlang der X-Achse des Radiallagers erstreckt, nicht dargestellt ist. Wie Fig. 2 zu entnehmen ist, bestehen sowohl das obere Lagerteil 7 als auch das untere Lagerteil 9 aus einem das Gehäuse des jeweiligen Lagerteils 7, 9 bildenden Außenteil 11, 11' sowie einem Innenteil 13,13'. Dabei weisen sowohl das Außenteil 11 des oberen Lagerteils 7 als auch das Außenteil 11' des unteren Lagerteils 9 eine Aussparung 15, 15' auf, so daß das Außenteil 11, 11' des Radiallagers 1 im zusammengebauten Zustand eine Öffnung aufweist, durch welche die Momentstütze 3 in das Innere des Radiallagers 1 hineinreicht. Ferner weist das Innenteil 13, 13' ebenfalls Aussparungen 17, 17' auf, die zur Aufnahme der Momentstütze 3 dienen. Die Momentstütze 3 wird über einen in Fig. 2 nicht dargestellten Gewindebolzen 19 mit dem Innenteil 13, 13' kraft- und formschlüssig verbunden. Hierzu weist das Innenteil 13' eine Bohrung 21' auf, durch welche der Gewindebolzen 19 hindurchgeführt wird, während in eine Bohrung 21 des Innenteils 13 ein Gewinde 23 eingelassen ist. In dieses Gewinde 23 wird der Gewindebolzen 19 eingeschraubt.

Neben der in den Figuren 1 und 2 dargestellten Verbindung der Momentstütze 3 mit dem Innenteil 13, 13' des Radiallagers 1 kann in einer nicht dargestellten Ausführungsform eines erfindungsgemäßen Radiallagers vorgesehen sein, daß eine Momentstütze durch eine Klippverbindung mit einem Innenteil verbunden wird, die Momentstütze selbst ein Gewinde aufweist und das Innenteil eine Gewindebohrung aufweist, in welche die Momentstütze eingeschraubt wird oder andere aus dem Stand der Technik bekannte Verfahren zur Befestigung der Momentstütze an dem Innenteil des Radiallagers realisiert werden.

Der zweiteilige Aufbau des Radiallagers 1 bietet verschiedene Vorteile. Einerseits wird eine leichtere Montage der Momentstütze an dem Radiallager ermöglicht und andererseits ist das Radiallager so modular aufgebaut und es können verschiedene obere Lagerteile mit verschiedenen unteren Lagerteilen zur Einstellung bestimmter Lagercharackteristiken miteinander kombiniert werden.

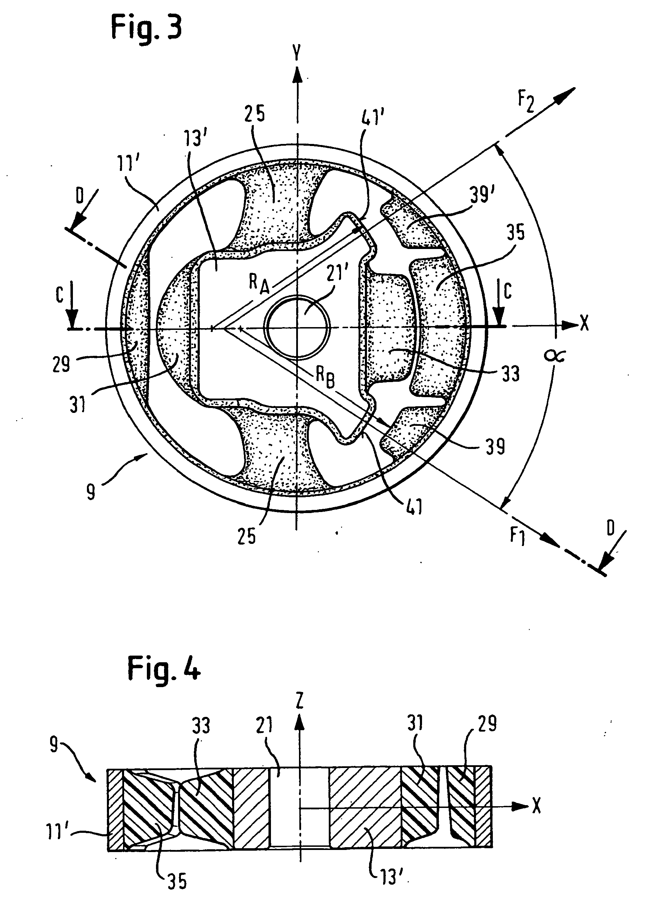

Im Zwischenraum zwischen dem Innenteil 13, 13' und dem Außenteil 11, 11 ' sind verschiedene Elastomerkörper angeordnet. Der Aufbau und die Verteilung der einzelnen Elastomerkörper wird im Folgenden anhand der Fig. 3, die eine Schnittansicht durch das untere Lagerteil 9 aus Richtung A in Fig. 2 darstellt, erläutert. Das Innenteil 13' ist über Tragkörper in Form von Stegen, 25, die im wesentlichen entlang der Y-Richtung verlaufen, mit dem Außenteil 11' verbunden. Die Stege 25 dienen zur Aufnahme der im unteren Lagerteil 9 wirkenden Kräfte im ruhenden Zustand eines über das Radiallager 1 abgestützten Körpers. Kommt es zu einer Bewegung des durch das Radiallager 1 abgestützten Körpers, so sind zur Aufnahme der dadurch entstehenden Kräfte zwischen dem Innenteil 13' und dem Außenteil 11' Prallsegmente sowie Endanschläge angeordnet. Das in den Figuren 1 bis 3 dargestellte Radiallager 1 ist insbesondere zur Aufnahme von Kräften, die entlang der X-Achse des Radiallagers 1 wirken, die beispielsweise der Fahrtrichtung eines Kraftfahrzeuges entspricht, ausgelegt. Hierzu sind die Endanschläge vorzugsweise symmetrisch zu dem in X-Richtung liegenden Prallsegment angeordnet. In anderen nicht dargestellten erfindungsgemäßen Ausführungsformen des Radiallagers kann auch vorgesehen sein, daß eine größere Anzahl von Prallsegmenten bzw. Endanschlägen und eine unterschiedliche Anordnung dieser vorgesehen ist. Hierbei können insbesondere Prallsegmente in beliebigen radialen Richtungen vorgesehen sein, wobei vorzugsweise jeweils zumindest zwei Endanschläge die vorzugsweise symmetrisch zu beiden Seiten der Prallsegmente angeordnet sind, vorliegen. Ferner kann eine andere Anordnung, als in der in Fig. 3 dargestellten Y-Richtung, der Stege 25 oder eine andere Form der Stege 25 gewählt werden, ohne sich vom Erfindungsgedanken der vorliegenden Erfindung zu entfernen.

Entlang der X-Richtung ist auf der in Fig. 3 dargestellten linken Seite des unteren Lagerteils 9 ein Prallsegment bestehend aus Elastomerkörpern 29 und 31 angeordnet. Auf der den Elastomerkörpern 29, 31 gegenüberliegenden Seite des Lagerteils 9 ist darüberhinaus ein Prallsegment bestehend aus Elastomerkörpern 33 und 35 ausgebildet. Kommt es zu einer Auslenkung des Innenteils 13' relativ zum Außenteil 11' aufgrund einer Krafteinwirkung auf das Radiallager 1 in X-Richtung, so gelangt das Innenteil 13' über den Elastomerkörper 31 bzw. 33 in Kontakt mit dem Außenteil 11' über den Elastomerkörper 29 bzw. 35. Dies führt dazu, daß das Innenteil 13' durch das Außenteil 11' abgestützt wird, jedoch im wesentlichen akustisch entkoppelt vom Außenteil 11' bleibt. Insbesondere werden als Material für die Elastomerkörper 29, 31, 33, 35 Werkstoffe mit geringer Härte und gutem dynamischen Verhalten verwendet. In aus dem Stand der Technik bekannten Radiallagern werden regelmäßig relativ harte elastische Prallkörper eingesetzt, deren Shore A- Härte im allgemeinen im Bereich von 70 liegt. In einem erfindungsgemäßen Radiallager sind hingegen auch elastische Prallkörper mit einer Härte von 30-55 Shore A, insbesondere auch im Bereich von 40 bis kleiner 50, einsetzbar. Eine derartige Materialauswahl wird durch eine Funktiönalitäfstrennung zwischen den Prallsegmenten und den nachfolgend beschriebenen Endanschlägen in Form von Elastomerkörpern 39, 39' erreicht. Erfolgt eine stärkere Auslenkung des Innenteils 13' relativ zum Außenteil 11' so gelangt das Innenteil 13' bei einer Auslenkung in Richtung des Prallsegments 33, 35 in Anschlag mit Elastomerkörpern 39, 39', die Endanschläge für das Innenteil-13' darstellen. Eine derartige-Auslenkung des Innenteils 13' wird insbesondere bei Stoßbelastungen, die auf das Innenteil 13' übertragen werden, erreicht. Durch die Aufteilung in Prallsegmente und Endanschläge wird eine Funktionstrennung vorgenommen. Dabei sind die Prallsegmente für den akustischen Bereich, die Endanschläge für die Kräfte oberhalb des maximalen Drehmoments ausgelegt. Wie Fig. 3 zu entnehmen ist, sind die Elastomerkörper 39, 39' unter einem Winkel α zueinander angeordnet, und befinden sich jeweils insbesondere entlang im wesentlichen der gesamten Längsachse des Radiallagers. Diese Anordnung der Endanschläge bewirkt, daß eine Stoßkraft, die in X-Richtung auf das Innehteil 13' wirkt, nicht punktüell auf das Außenteil 11' übertragen wird, sondern in zwei Kraftkomponenten F₁, F₂ in einer Ebene senkrecht zur Längsachse (Z) des Lagers aufgeteilt wird. Hierbei ist es besonderes vorteilhaft, wenn der Winkel α im Bereich von 30° - 150° liegt. Zweckmäßigerweise ist der Winkel α größer als 40° und kleiner als 110° und bevorzugt im Bereich von 60° und 70°. Somit trägt der Endanschlag seine Kran in einem großen Winkel auf das Außenteil 11' ab, was zu einer Reduzierung der auf die Elastomerkörper 39, 39' wirkende Kraftkomponente bewirkt und somit eine gleichmäßige Kraftübertragung auf das Außenteil 11' sicherstellt. Hierbei wirkt sich insbesondere vorteilhaft aus, wenn die Kontur der Elastomerkörper 39, 39' sowie der Oberflächenbereiche 41,41' des Innenteils 13' aufeinander abgestimmt sind. Insbesondere ist in dem Radiallager 1 vorgesehen, daß die Oberflächen 41, 41' und 39, 39' jeweils gewölbt sind, wobei die Radien dieser Wölbung R_{A} bzw. R_{B} gleich sind. Dies führt dazu, daß die auf das Innenteil 13' wirkende Kraft in einer Flächenlast auf die Endanschläge abgetragen wird. Die Verwendung der Endanschläge innerhalb des Radiallagers 1 bewirkt, daß bei Dimensionierung der Elastomerkörper 33, 35 Stoßkräfte nicht einbezogen werden müssen. Diese werden über die Elastomerkörper 39, 39' auf das Außenteil 11' übertragen. Durch eine geeignete Auswahl der Abstände zwischen den Elastomerkörpem 33, 35 bzw. dem Innenteil 13' und den Elastomerkörpem 39, 39' läßt sich eine im wesentlichen frei einstellbare Federcharakteristik des Radiallagers in X-Richtung einstellen. In einer weiteren nicht dargestellten Ausführungsform kann vorgesehen sein, daß die Prallsegmente und/oder Endanschläge durch Elastomerkörper gebildet werden, die das Innenteil mit dem Außenteil verbinden. In dieser Ausführungsform werden die Dämpfungscharakteristiken über die elastischen Eigenschaften dieser Elastomerkörper eingestellt.

In der in den Figuren 1 bis 3 dargestellten Ausführungsform des Radiällagers 1 wird die Steuerung des Endanschlages dadurch erreicht, daß der Freigang zwischen dem Innenteil 13' und den Elastomerkörpern 39, 39' eingestellt und ferner die Endanschlagsprogression durch die Dicke der Elastomerkörper 39, 39' eingestellt werden kann.

In Fig. 4 ist eine Schnittansicht des unteren Lagerteils 9 aus Richtung C der Fig. 3 dargestellt. Wie aus Fig. 4 ersichtlich, sind die Oberflächen der Elastomerkörper 33, 35 bzw. 29, 31 nicht planparallel zueinander ausgerichtet. In Fig. 4 ist das untere Lagerteil 9 im unbelasteten Zustand des Radiallagers dargestellt. Wird das Radiallager nun mit einem Moment belastet, so kommt es zu einer Rotation des inneren Lagerteils 13' relativ zum Außenteil 11' aufgrund der über die Momentstütze übertragene Kraft, so daß dann die gegenüberliegenden Oberflächen der Elastomerkörper 33, 35 bzw. 29, 31 parallel zueinander ausgerichtet sind. Dies bewirkt bei einer dynamischen Belastung des Radiallagers 1 eine gleichmäßige Flächenbelastung der Elastomerkörper 33, 35 bzw. 31, 29 und damit eine gleichmäßige Kraftübertragung auf das Außenteil 11', wodurch ebenfalls punktuelle Belastungen desselben vermieden werden.

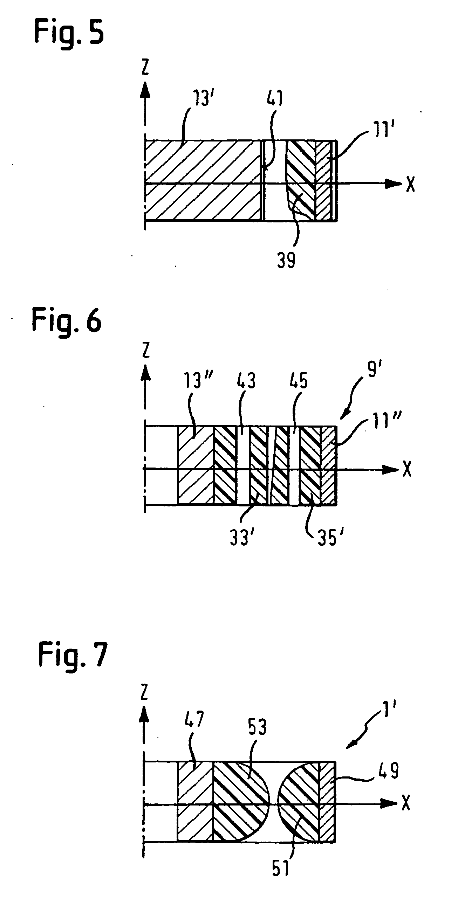

In Fig. 5 ist eine Teilschnittansicht des unteren Lagerteils 9 aus Richtung D der Fig. 3 dargestellt. Wie aus einem Vergleich der Figuren 4 und 5 ersichtlich ist der Abstand zwischen den Elastomerkörpern 33, 35 bzw. 31, 29, die die Prallsegmente bilden geringer als der Abstand zwischen dem Elastomerkörper 39 bzw. der Oberfläche 41 des Innenteils 13', die einen Endanschlag bilden.

In Fig. 6 ist eine weitere Ausführungsform eines unteren Lagerteils 9' dargestellt. Die Darstellung entspricht der Sicht aus Richtung C in Fig. 3. Wie Fig. 6 zu entnehmen ist, weist das untere Lagerteil 9' ein Innenteil 13" und ein Außenteil 11" auf. Als Prallsegment dienen Elastomerkörper 33' und 35'. Die Elastomerkörper 33', 35' weisen in ihrem Inneren Hohlräumen 43, 45 auf. Eine derartige Ausgestaltung der Elastomerkörper 33', 35' ermöglichtes, daß die Dämpfungseigenschaften der Elastomerkörper 33', 35' in einem weiten Bereich einstellbar sind. Insbesondere lassen sich auf einfache Weise die Dämpfungseigenschaften der Elastomerkörper 33', 35' einstellen, indem ein nicht dargestellte Drosselstellen eine Verbindung der Hohlräume 43, 45 mit der Umgebung bilden. Ferner kann vorgesehen sein, daß der Druck eines Fluids innerhalb der Hohlräume 43, 45 auch während des Betriebes des Radiallagers einstellbar ist, um auch während des Betriebes des Radiallagers die Dämpfungs- und Federeigenschaften des Radiallagers einstellen zu können.

Schließlich ist in Fig. 7 eine Teilschnittansicht eines weiteren erfindungsgemäßen Radiallagers 1' dargestellt. Entgegen dem Radiallager 1 ist das Radiallager 1' einteilig ausgeführt und eine nicht dargestellte gabelförmige Momentstütze ist mit einem Innenteil 47 in der aus dem Stand der Technik bekannten Weise verbunden. Ferner umfaßt das Radiallager 1' ein Außenteil 49 und ein Prallsegment zwischen dem Innenteil 47 und dem Außenteil 49, das von Elastomerkörpern 51, 53 gebildet wird. Wie Fig. 7 zu entnehmen ist, sind die Oberflächen der Elastomerkörper nicht komplementär zueinander ausgeführt, sondern weisen beide eine gewölbte Oberfläche auf. Dies bewirkt, daß bei einer Rotation des Innenteils 47 durch eine auf das Radiallager 1' wirkende Kraft der Abstand zwischen den Elastomerkörpern 51, 53 konstant bleibt.

### Bezugszeichenliste

- 1, 1': Radiallager
- 3: Momentstütze
- 5: Träger
- 7: Lagerteil
- 9, 9': Lagerteil
- 11, 11', 11": Außenteil
- 13, 13', 13": Innenteil
- 15, 15': Aussparung
- 17, 17': Aussparung
- 19: Gewindebolzen
- 21, 21': Bohrung
- 23: Gewinde
- 25: Stege
- 29: Elastomerkörper
- 31: Elastomerkörper
- 33: Elastomerkörper
- 35: Elastomerkörper
- 39,39': Elastomerkörper
- 41, 41': Oberfläche
- 43: Hohlraum
- 45: Hohlraum
- 47: Innenteil
- 49: Außenteil
- 51: Elastomerkörper
- 53: Elastomerkörper

- F₁, F₂: Kraftkomponente
- α: Winkel

## Patentansprüche

1. Radiallager (1, 1'), insbesondere zur Lagerung von Maschinen, Maschinenteilen und/oder Kraftfahrzeugteilen, zur Aufnahme von Kräften entlang einer Radialrichtung (X-Richtung) umfassend ein sich entlang einer Längsachse des Radiallagers (1, 1') erstreckendes, mit einem zu lagernden Körper über zumindest eine Momentstütze (3) verbindbares im wesentlichen starres Innenteil (13, 13', 13", 47) und ein widerlagerbildendes, das Innenteil (13, 13', 13", 47), insbesondere zumindest bereichsweise koaxial, umgebendes im wesentlichen starres Außenteil (11, 11', 11'', 49), zumindest einen das Innenteil (13, 13', 13", 47) mit dem Außenteil (11,11',11'', 49) verbindenden elastischen Tragkörper (25), wobei das Innenteil (13, 13', 13", 47) im wesentlichen in der zur Längsachse senkrechten Radialrichtung (X-Richtung) relativ zum Außenteil (11, 11', 11 ", 49) bewegbar ist, und zumindest zwei unter einem, insbesondere in einer radialen Ebene des Radiallagers liegenden, ersten Winkel (α) voneinander beabstandete Endanschläge (39, 39', 41, 41'), zumindest ein Prallsegment (33, 33', 35', 51, 53), mittels dem im wesentlichen ab einer ersten Auslenkung des Innenteils (13, 13', 13", 47) in der Radialrichtung (X-Richtung) aus seiner Ruhelage eine Kraft auf das Außenteil (11, 11', 11 ", 49) übertragbar ist, und zumindest einen Endanschlag (39, 39', 41), mittels dem im wesentlichen ab einer zweiten Auslenkung des Innenteils (13, 13', 13 ", 47) in der Radialrichtung (X-Richtung) des Prallsegments aus seiner Ruhelage eine Kraft auf das Außenteil (11, 11', 11 ", 49) übertragbar ist, wobei die erste Auslenkung geringer als die zweite Auslenkung ist, **dadurch gekennzeichnet, dass** die Endanschläge (39, 39', 41, 41') durch die Kontur des Innenteils (41, 41') und/oder des Außenteils (11, 11', 11", 49) derart ausgebildet sind, dass zur Vermeidung einer punktuellen Belastung in der genannten radialen Ebene komplementäre Oberflächen in Anschlag kommen.

2. Radiallager nach Anspruch 1, **dadurch gekennzeichnet, daß** die Endanschläge (39, 39', 41,41') im wesentlichen in einer gemeinsamen radialen Ebene gemeinsam mit dem Prallsegment (29, 31, 33, 35) angeordnet sind, wobei das Prallsegment (33, 35) zwischen den Endanschlägen (39, 39', 41, 41') angeordnet ist.

3. Radiallager nach Anspruch 1 oder 2, **dadurch gekennzeichnet, daß** der erste Winkel (α) im Bereich von 30° bis 150° liegt.

4. Radiallager nach einem der Ansprüche 1 bis 3, **dadurch gekennzeichnet, daß** das Prallsegment zumindest einen ersten mit dem Innenteil (13', 13", 47) verbundenen elastischen Körper (31, 33, 33', 53) oder zumindest einen zweiten mit dem Außenteil (11', 11 ", 49) verbundenen elastischen Körper (29, 35, 35', 51) umfaßt oder das Prallsegment durch die Kontur des Innenteils (13') oder des Außenteils gebildet ist, wobei der erste elastische Körper oder die Kontur des Innenteils eine zu dem zweiten elastischen Körper oder der Kontur des Außenteils komplementäre Oberflächenform aufweisen.

5. Radiallager nach einem der Ansprüche 1 bis 4, **dadurch gekennzeichnet, daß** die Endanschläge jeweils zumindest einen dritten mit dem Innenteil verbundenen elastischen Körper oder jeweils zumindest einen vierten mit dem Außenteil verbundenen elastischen Körper (39, 39') umfassen, wobei der dritte elastische Körper oder die Kontur des Innenteils (41, 41') eine zu dem vierten elastischen Körper (39, 39') oder der Kontur des Außenteils komplementäre Oberflächenform aufweisen.

6. Radiallager nach einem der Ansprüche 1 oder 5, **dadurch gekennzeichnet, daß** der erste, zweite, dritte und/oder vierte elastische Körper zumindest zwei Bereiche unterschiedlicher Elastizität aufweist bzw. aufweisen.

7. Radiallager nach einem der Ansprüche 1 bis 6, **dadurch gekennzeichnet, daß** der erste und zweite elastische Körper, der dritte und vierte elastische Körper oder der erste, zweite, dritte und/oder vierte elastische Körper einstückig ausgebildet sind.

8. Radiallager nach einem der Ansprüche 1 bis 7, **dadurch gekennzeichnet, daß** der erste, zweite, dritte oder vierte elastische Körper (33', 35') zumindest einen Hohlraum (43, 45), zumindest eine denselben bzw. dieselben zumindest bereichsweise durchsetzende Bohrung und/oder zumindest einen Hohlkanal aufweisen, wobei der Hohlraum, die Bohrung oder der Hohlkanal mit einem Fluid füllbar sind, der Hohlraum, die Bohrung oder der Hohlkanal zur Einstellung der elastischen Eigenschaften des bzw. der elastischen Körper vorzugsweise mittels zumindest eines Ventils zum Hinzufügen oder Entnehmen von Fluid aus dem Hohlraum, der Bohrung oder dem Hohlkanal öffnenbar und verschließbar sind, der Hohlraum, die Bohrung oder der Hohlkanal zumindest eine Verbindung mit der Umgebung des bzw. der elastischen Körper(s) mittels zumindest eines Drosselelementes aufweisen oder zumindest zwei voneinander getrennte oder über zumindest ein Ventil oder zumindest ein Drosselelement miteinander in Wirkverbindung stehende Hohlräume, Bohrungen und/oder Hohlkanäle in dem bzw. den elastischen Körper(n) vorhanden sind.

9. Radiallager nach einem der Ansprüche 1 bis 8, **dadurch gekennzeichnet, daß** eine, insbesondere im an das Radiallager angrenzenden Bereich, gabelförmig ausgeführte Momentstütze Angriff an den axialen Enden des Innenteils findet.

10. Radiallager nach Anspruch 9, **dadurch gekennzeichnet, daß** der erste, zweite, dritte oder vierte elastische Körper (51, 53) oder der das Prallsegment oder den Endanschlag bildende Bereich des Innenteils oder Außenteils entlang der Längsachse des Radiallagers (1') zumindest bereichsweise gewölbte Kontur aufweist.

11. Radiallager nach einem der Ansprüche 1 bis 9, **dadurch gekennzeichnet, daß** das Außenteil (11, 11'), der zweite oder der vierte elastische Körper zumindest eine im wesentlichen in radialer Richtung verlaufende erste Öffnung (15, 15') zur Hindurchführung der Momentstütze (3) durch das Außenteil (11, 11') aufweist.

12. Radiallager nach Anspruch 11, **dadurch gekennzeichnet, daß** der Tragkörper zum Hindurchführen der Momentstütze zumindest eine zweite Öffnung oder das Innenteil (13, 13'), der erste oder dritte elastische Körper zur Aufnahme der Momentstütze zumindest eine dritte Öffnung (17, 17') aufweist, wobei sich die erste (15, 15'), zweite oder dritte Öffnung (17, 17') zumindest teilweise überdecken.

13. Radiallager nach Anspruch 11 oder 12, **dadurch gekennzeichnet, daß** die erste (15, 15'), zweite oder dritte (17, 17') Öffnung im wesentlichen mittig bezüglich der Länge des Radiallagers (1) angeordnet sind.

14. Radiallager nach einem der Ansprüche 1 bis 13, **dadurch gekennzeichnet, daß** das Innenteil (13, 13'), der elastische Tragkörper, der erste, zweite, dritte oder vierte elastische Körper oder das Außenteil (11,11') entlang zumindest einer Ebene senkrecht zur Längsachse des Radiallagers (1) im Bereich der ersten (15, 15'), zweiten oder dritten (17, 17') Öffnung mehrteilig ausgeführt sind, wobei die beiden Teile des Innenteils (13, 13'), des Tragkörpers, des ersten, zweiten, dritten oder vierten elastischen Körpers oder des Außenteils (11, 11') im wesentlichen spiegelsymmetrisch zu der Ebene ausgebildet sind.

15. Radiallager nach einem der Ansprüche 4 bis 14, **dadurch gekennzeichnet, daß** der erste (31, 33) oder dritte elastische Körper oder der das Prallsegment oder den Endanschlag bildende Bereich des Innenteils zumindest bereichsweise eine bezüglich der Längsachse des Radiallagers (1) geneigte Kontur aufweist, wobei die Kontur vorzugsweise ausgehend von einer auf Höhe der ersten Öffnung liegenden, radialen Ebene entlang der Längsachse des Radiallagers in radialer Richtung nach außen geneigt ist.

16. Radiallager nach einem der Ansprüche 4 bis 15, **dadurch gekennzeichnet, daß** der zweite (29, 35, 35') oder vierte elastische Körper oder der das Prallsegment oder den Endanschlag bildende Bereich des Außenteils zumindest bereichsweise eine bezüglich der Längsachse des Radiallagers (1) geneigte Kontur aufweist, wobei die Kontur ausgehend von einer auf Höhe der ersten Öffnung liegenden, radialen Ebene der ersten Öffnung entlang der Längsachse des Radiallagers in radialer Richtung nach außen geneigt ist.

17. Radiallager nach einem der Ansprüche 11 bis 16, **dadurch gekennzeichnet, daß** das Innenteil (13, 13') mittels einer Steck-, Klipp-, Schweiß-, Kleb- oder Schraubverbindung mit der Momentstütze (3) verbindbar ist, wobei die Schraubverbindung zumindest ein von dem Innenteil oder der Momentstütze umfaßtes Außengewinde und eine von der Momentstütze (3) oder dem Innenteil umfaßten Gewindebohrung oder einen durch eine Bohrung (21, 21') sowohl im Innenteil als auch der Momentstütze (3) verlaufenden Gewindebolzen (19), wobei die Bohrung (21, 21') des Innenteils (13) und/oder der Momentstütze zumindest bereichsweise ein Innengewinde (23) oder eine aufgesetzte Mutter aufweist, umfaßt, oder das Innenteil einstückig mit der Momentstütze ausbildbar ist.

## Claims

1. A radial bearing (1, 1'), more preferably for the mounting of machines, machine components and/or motor vehicle components to accommodate forces along a radial direction (X-direction) comprising a substantially rigid inner part (13, 13', 13", 47) extending along a longitudinal axis of the radial bearing (1, 1') that can be connected with a body to be mounted via at least one moment support (3) and a substantially rigid outer part (11, 11', 11", 49) forming a support bearing, which more preferably at least in regions coaxially surrounds the inner part (13, 13', 13", 47), at least one elastic support body (25) joining the inner part (13, 13', 13", 47) with the outer part (11, 11', 11", 49), wherein the inner part (13, 13', 13", 47) can be substantially moved in the radial direction (X-direction) perpendicularly to the longitudinal axis relative to the outer part (11, 11', 11", 49), and at least two end stops (39, 39', 41, 41') spaced from each other and located at a first angle (α) more preferably located in a radial plane of the radial bearing, a impact segment (33, 33", 35', 51, 53) by means of which a force can be substantially transmitted to the outer part (11, 11', 11", 49) from a first deflection of the inner part (13, 13', 13", 47) in the radial direction (X-direction) from its rest position and the end stops (39, 39", 41) by means of which a force can be transmitted to the outer part (11, 11', 11", 49) substantially from a second deflection of the inner part (13, 13', 13", 47) in the radial direction (X-direction) of the impact segment from its rest position, wherein the first deflection is less than the second deflection, **characterized in that** the end stops (39, 39', 41, 41') are embodied through the contour of the inner part (41, 41') and/or the outer part (11, 11', 11", 49) in such a manner that to avoid a concentrated load a surface load is generated when complementary surfaces come to a stop.

2. The radial bearing according to Claim 1, **characterized in that** the end stops (39, 39', 41, 41') are substantially arranged in a common radial plane jointly with the impact segment (29, 31, 33, 35), wherein the impact segment (33, 35) is arranged between the end stops (39, 39', 41, 41').

3. The radial bearing according to Claim 1 or 2, **characterized in that** the first angle (α) lies in the range from 30° to 150°.

4. The radial bearing according to any one of the Claims 1 to 3, **characterized in that** the impact segment comprises at least a first elastic body (31, 33, 33', 53) connected with the inner part (13', 13", 47) or at least a second elastic body (29, 35, 35', 51) connected with the outer part (11', 11", 49) or the impact segment is formed through the contour of the inner part (13') or the outer part, wherein the first elastic body or the contour of the inner part comprises a surface shape that is complementary to the second elastic body or the contour of the outer part.

5. The radial bearing according to any one of the Claims 1 to 4, **characterized in that** the end stops each comprise at least one third elastic body connected with the inner part or at least a fourth elastic body (39, 39') connected with the outer part, wherein the third elastic body or the contour of the inner part (41, 41') comprise a surface shape that is complementary to the fourth elastic body (39, 39') or the contour of the outer part.

6. The radial bearing according to one of the Claims 1 or 5, **characterized in that** the first, second, third and/or fourth elastic body comprises or comprise at least two regions of different elasticity.

7. The radial bearing according to any one of the Claims 1 to 6, **characterized in that** the first and second elastic body, the third and fourth elastic body or the first, second, third and/or fourth elastic body are embodied as one piece.

8. The radial bearing according to any one of the Claims 1 to 7, **characterized in that** the first, second, third or fourth elastic body (33', 35') comprise at least one hollow space (43, 45) at least one bore that at least in regions penetrates said body or bodies and/or at least one hollow channel, wherein the hollow space, the bore or the hollow channel can be filled with a fluid, the hollow space, the bore or the hollow channel can be opened and closed for adjusting the elastic characteristics of the elastic body or bodies preferentially by means of at least one valve for the addition or removal of fluid from the hollow space, the bore or the hollow channel, the hollow space, the bore or the hollow channel comprise at least one connection with the surroundings of the elastic body or bodies by means of at least one throttle element or at least two hollow spaces, bores and/or hollow channels which are separated from each other or are operationally connected with each other via at least one valve or at least one throttle element is/are present in the elastic body or bodies.

9. The radial bearing according to any one of the Claims 1 to 8, **characterized in that** a moment support embodied forkshaped more preferably in the region adjoining the radial bearing is able to find a grip on the axial ends of the inner part.

10. The radial bearing according to Claim 9, **characterized in that** the first, second, third or fourth elastic body (51, 53) or the region of the inner part or outer part forming the impact segment or the end stop at least in regions has a curved contour along the longitudinal axis of the radial bearing (1').

11. The radial bearing according to any one of the Claims 1 to 9, **characterized in that** the outer part (11, 11'), the second or the fourth elastic body comprises at least one first opening (15, 15') substantially orientated in radial direction for the passing through of the moment support (3) through the outer part (11, 11').

12. The radial bearing according to Claim 11, **characterized in that** the support body for the passing-through of the moment support comprises at least one second opening or the inner part (13, 13'), the first or third elastic body for accommodating the moment support comprises at least one third opening (17, 17'), wherein the first (15, 15'), second or third opening (17, 17') cover each other at least partially.

13. The radial bearing according to Claim 11 or 12, **characterized in that** the first (15, 15'), second or third (17, 17') opening is substantially arranged in the middle with regard to the length of the radial bearing (1).

14. The radial bearing according to any one of the Claims 1 to 13, **characterized in that** the inner part (13, 13'), the elastic support body, the first, second, third or fourth elastic body or the outer part (11, 11') are embodied in multiple parts along at least one plane vertically to the longitudinal axis of the radial bearing (1) in the region of the first (15, 15'), second or third (17, 17') opening, wherein the two parts of the inner part (13, 13'), of the support body, the first, second, third or fourth elastic body or the outer part (11, 11') are embodied substantially mirror-symmetrically to the plane.

15. The radial bearing according to any one of the Claims 4 to 14, **characterized in that** the first (31, 33) or third elastic body or the region of the inner part forming the impact segment or the end stop at least in regions comprises a contour that is inclined with regard to the longitudinal axis of the radial bearing (1), wherein the contour, preferentially starting from a radial plane located at the height of the first opening is inclined in radial direction to the outside along the longitudinal axis of the radial bearing.

16. The radial bearing according to any one of the Claims 4 to 15, **characterized in that** the second (29, 35, 35') or fourth elastic body or the region of the outer part forming the impact segment or the end stop at least in regions comprises a contour that is inclined with regard to the longitudinal axis of the radial bearing (1), wherein the contour starting from a radial plane of the first opening located at the height of the first opening is inclined in radial direction to the outside along the longitudinal axis of the radial bearing.

17. The radial bearing according to any one of the Claims 11 to 16, **characterized in that** the inner part (13, 13') can be connected with the moment support (3) by means of a plugging, clipping, welding, gluing or screwing connection, wherein the screw connection at least comprises an outer thread enclosed by the inner part or the moment support and a threaded bore enclosed by the moment support (3) or the inner part or a threaded pin (19) which runs through a bore (21, 21') both in the inner part as well as the moment support (3), wherein the bore (21, 21') of the inner part (13) and/or of the moment support at least in regions comprises an internal thread (23) or a fitted nut, or the inner part can be embodied as one piece with the moment support.

## Revendications

1. Palier radial (1, 1'), en particulier pour le logement de machines, parties de machine et/ou parties de véhicule, pour l'absorption de forces le long d'une direction radiale (direction X) comprenant une partie intérieure (13, 13', 13", 47) sensiblement rigide, s'étendant le long d'un axe longitudinal du palier radial (1, 1'), pouvant être reliée à un corps à loger au moyen d'au moins un support de couple (3) et une partie extérieure (11, 11', 11", 49), sensiblement rigide, formant un palier de butée, entourant la partie intérieure (13, 13', 13", 47), en particulier au moins par zones de façon coaxiale, au moins un corps porteur (25) élastique, reliant la partie intérieure (13, 13', 13", 47) à la partie extérieure (11, 11', 11", 49), la partie intérieure (13, 13', 13", 47) pouvant être déplacée sensiblement dans la direction radiale (direction X) perpendiculaire à l'axe longitudinal par rapport à la partie extérieure (11, 11', 11", 49), et au moins deux butées d'extrémité (39, 39', 41, 41') espacées l'une de l'autre sous un premier angle (α), situé en particulier dans un plan radial du palier radial, un segment de rebondissement (33, 33', 35', 51, 53), au moyen duquel une force peut être transmise sensiblement à partir d'une première déviation de la partie intérieure (13, 13', 13", 47) dans la direction radiale (direction X) à partir de sa position de repos à la partie extérieure (11, 11', 11", 49), et les butées d'extrémité (39, 39', 41), au moyen desquelles une force peut être transmise sensiblement à partir d'une seconde déviation de la partie intérieure (13, 13', 13", 47) dans la direction radiale (direction X) du segment de rebondissement à partir de sa position de repos à la partie extérieure (11, 11', 11", 49), la première déviation étant plus faible que la seconde déviation, **caractérisé en ce que** les butées d'extrémité (39, 39', 41, 41') sont formées par le contour de la partie intérieure (41, 41') et/ou de la partie extérieure (11, 11', 11", 49) de telle sorte qu'une charge de surface est générée afin d'éviter une charge ponctuelle lorsque des surfaces complémentaires viennent en butée.

2. Palier radial selon la revendication 1, **caractérisé en ce que** les butées d'extrémité (39, 39', 41, 41') sont disposées sensiblement dans un plan radial commun conjointement avec le segment de rebondissement (29, 31, 33, 35), le segment de rebondissement (33, 35) étant disposé entre les butées d'extrémité (39, 39', 41, 41').

3. Palier radial selon la revendication 1 ou 2, **caractérisé en ce que** le premier angle (α) se situe dans la plage de 30° à 150°.

4. Palier radial selon l'une quelconque des revendications 1 à 3, **caractérisé en ce que** le segment de rebondissement comporte au moins un premier corps (31, 33, 33', 53) élastique relié à la partie intérieure (13', 13", 47) ou au moins un second corps (29, 35, 35', 51) élastique relié à la partie extérieure (11', 11", 49) ou le segment de rebondissement est formé par le contour de la partie intérieure (13') ou de la partie extérieure, le premier corps élastique ou le contour de la partie intérieure présentant une forme de surface complémentaire par rapport au second corps élastique ou au contour de la partie extérieure.

5. Palier radial selon l'une quelconque des revendications 1 à 4, **caractérisé en ce que** les butées d'extrémité comportent chacune au moins un troisième corps élastique relié à la partie intérieure ou chacune au moins un quatrième corps (39, 39') élastique relié à la partie extérieure, le troisième corps élastique ou le contour de la partie intérieure (41, 41') présentant une forme de surface complémentaire par rapport au quatrième corps (39, 39') élastique ou au contour de la partie extérieure.

6. Palier radial selon l'une quelconque des revendications 1 ou 5, **caractérisé en ce que** le premier, le second, le troisième et/ou le quatrième corps élastiques présente(nt) deux zones d'élasticité différentes.

7. Palier radial selon l'une quelconque des revendications 1 à 6, **caractérisé en ce que** le premier et le second corps élastiques, le troisième et le quatrième corps élastiques ou le premier, le second, le troisième et/ou le quatrième corps élastiques sont conçus d'une seule pièce.

8. Palier radial selon l'une quelconque des revendications 1 à 7, **caractérisé en ce que** le premier, le second, le troisième ou le quatrième corps élastiques (33', 35') présentent au moins une cavité (43, 45), au moins un perçage traversant la même cavité ou les mêmes cavités au moins par endroits et/ou au moins un canal creux, la cavité, le perçage ou le canal creux pouvant être rempli avec un fluide, la cavité, le perçage et/ou le canal creux pouvant être ouverts et fermés pour le réglage des propriétés élastiques du ou des corps élastiques de préférence au moyen d'au moins une vanne pour l'ajout ou le prélèvement de fluide de la cavité, du perçage ou du canal creux, la cavité, le perçage ou le canal creux présentant au moins une liaison avec l'environnement du ou des corps élastiques au moyen d'au moins un élément d'étranglement ou au moins deux cavités, perçages et/ou canaux creux séparés l'un de l'autre ou en liaison active l'un avec l'autre au moyen d'au moins une vanne ou au moins un moyen d'étranglement étant présents dans le ou les corps élastiques.

9. Palier radial selon l'une quelconque des revendications 1 à 8, **caractérisé en ce qu'**un support de couple réalisé en forme de fourche, en particulier dans la zone contiguë au palier radial, s'applique sur les extrémités axiales de la partie intérieure.

10. Palier radial selon la revendication 9, **caractérisé en ce que** le premier, le second, le troisième ou le quatrième corps élastique (51, 53) ou la zone, formant le segment de rebondissement ou la butée d'extrémité, de la partie intérieure ou de la partie extérieure, présente un contour incurvé au moins par endroits le long de l'axe longitudinal du palier radial (1').

11. Palier radial selon l'une quelconque des revendications 1 à 9, **caractérisé en ce que** la partie extérieure (11, 11'), le second ou le quatrième corps élastique présente au moins une première ouverture (15, 15'), agencée sensiblement dans la direction radiale, pour le guidage du support de couple (3) à travers la partie extérieure (11, 11').

12. Palier radial selon la revendication 11, **caractérisé en ce que** le corps support présente au moins une seconde ouverture pour le guidage et le passage du support de couple ou bien la partie intérieure (13, 13'), le premier ou le troisième corps élastique présente au moins une troisième ouverture (17, 17') pour la réception du support de couple, la première ouverture (15, 15'), la seconde ou la troisième ouverture (17, 17') se chevauchant au moins partiellement.

13. Palier radial selon la revendication 11 ou 12, **caractérisé en ce que** la première ouverture (15, 15'), la seconde ou la troisième ouverture (17, 17') sont disposées sensiblement au centre par rapport à la longueur du palier radial (1).

14. Palier radial selon l'une quelconque des revendications 1 à 13, **caractérisé en ce que** la partie intérieure (13, 13'), le corps support élastique, le premier, le second, le troisième ou le quatrième corps élastique ou la partie extérieure (11, 11') sont réalisés en plusieurs parties le long d'au moins un plan perpendiculairement à l'axe longitudinal du palier radial (1) dans la zone de la première ouverture (15, 15'), de la seconde ou de la troisième ouverture (17, 17'), les deux parties de la partie intérieure (13, 13') du corps support, du premier, du second, du troisième ou du quatrième corps élastique ou de la partie extérieure (11, 11') étant réalisées de façon sensiblement symétrique au plan.

15. Palier radial selon l'une quelconque des revendications 4 à 14, **caractérisé en ce que** le premier corps (31, 33) ou le troisième corps élastique ou la zone, formant le segment de rebondissement ou la butée d'extrémité, de la partie intérieure présente au moins par endroits un contour incliné par rapport à l'axe longitudinal du palier radial (1), le contour étant incliné dans la direction radiale vers l'extérieur de préférence à partir d'un plan radial, situé à la hauteur de la première ouverture, le long de l'axe longitudinal du palier radial.

16. Palier radial selon l'une quelconque des revendications 4 à 15, **caractérisé en ce que** le second corps (29, 35, 35') ou le quatrième corps élastique ou la zone, formant le segment de rebondissement ou la butée d'extrémité, de la partie extérieure présente au moins par endroits un contour incliné par rapport à l'axe longitudinal du palier radial (1), le contour étant incliné dans la direction radiale vers l'extérieur à partir d'un plan radial, situé à la hauteur de la première ouverture, de la première ouverture le long de l'axe longitudinal du palier radial.

17. Palier radial selon l'une quelconque des revendications 11 à 16, **caractérisé en ce que** la partie intérieure (13, 13') peut être reliée au moyen d'une liaison par enfichage, clipsage, soudage, collage ou vissage avec le support de couple (3), l'assemblage par vissage comportant au moins un filetage extérieur entouré par la partie intérieure ou le support de couple et un taraudage entouré par le support de couple (3) ou la partie intérieure ou un boulon fileté (19) s'étendant à travers un perçage (21, 21') aussi bien dans la partie intérieure que dans le support de couple (3), le perçage (21, 21') de la partie intérieure (13) et/ou du support de couple présentant au moins par endroits un filetage intérieur (23) ou un écrou posé dessus, ou bien la partie intérieure pouvant être réalisée d'une seule pièce avec le support de couple.
